# EUROPÄISCHE PATENTSCHRIFT

(11) **EP 0 941 421 B1**
(45) Veröffentlichungstag und Bekanntmachung des Hinweises auf die Patenterteilung: **08.05.2002**
(21) Anmeldenummer: 97941832.4
(22) Anmeldetag: 28.08.1997
(51) Int. Cl.: F16D 65/16, B60T 13/74

(54) **ELEKTROMECHANISCHE RADBREMSVORRICHTUNG**
WHEEL-MOUNTED ELECTRO-MECHANICAL BRAKE
FREIN ELECTROMECANIQUE MONTE SUR ROUE

(30) Priorität: 05.12.1996 DE 19650405
(43) Veröffentlichungstag der Anmeldung: 15.09.1999
(73) Patentinhaber: ROBERT BOSCH GMBH, 70442 Stuttgart (DE)
(72) Erfinder: SCHAFFER, Wolfram, D-71679 Asperg (DE)
(86) Internationale Anmeldenummer: DE9701863
(87) Internationale Veröffentlichungsnummer: WO9825046

(56) Entgegenhaltungen:
- WO-A-96/03301
- DE-A- 19 511 287
- FR-A- 1 494 173

## Beschreibung

### Stand der Technik

Die Erfindung betrifft eine elektromechanische Radbremsvorrichtung für ein Kraftfahrzeug mit den Merkmalen des Oberbegriffs des Anspruchs 1.

Eine derartige Radbremsvorrichtung ist bekannt aus der WO 96/03301. Die bekannte Radbremsvorrichtung ist als Scheibenbremse ausgebildet. Sie weist einen als Schwimmsattel ausgebildeten Bremssattel auf, in dem zwei Reibbremsbeläge beiderseits einer zwischen ihnen in Rotation versetzbaren Bremsscheibe als Bremskörper angeordnet sind. Zum Andrücken eines der beiden Reibbremsbeläge an die eine Seite der Bremsscheibe weist die bekannte Radbremsvorrichtung einen Spindeltrieb auf, dessen Gewindemutter von einem Elektromotor rotierend antreibbar ist und dessen Gewindespindel gegen den einen Reibbremsbelag drückbar ist. Der andere Reibbremsbelag wird in an sich bekannter Weise durch beim Andrücken des einen Reibbremsbelags auftretende Reaktionskräfte, die der Schwimmsattel auf den anderen Reibbremsbelag überträgt, gegen die andere Seite der Bremsscheibe gedrückt.

Zur Rückstellung der bekannten Radbremsvorrichtung im Fehlerfall, d.h. bei Ausfall einer Steuerelektronik oder bei Ausfall des Elektromotors oder seiner Stromversorgung, weist die bekannte Radbremsvorrichtung eine Rückstellfeder in Form einer Spiralfeder auf, die sich am Bremssattel abstützt und an der Gewindespindel angreift. Diese Spiralfeder wird beim Betätigen der Radbremsvorrichtung gespannt und löst die Radbremsvorrichtung nach Beendigung einer Bremsung durch Rückdrehen der Gewindespindel. Die bekannte Radbremsvorrichtung hat den Nachteil, daß ihre Rückstellfeder bei jeder Bremsbetätigung gespannt wird, wozu Energie erforderlich ist, wodurch der Wirkungsgrad der bekannten Radbremsvorrichtung verringert ist. Hinzu kommt, daß die Federkraft der Rückstellfeder beim Betätigen der Radbremsvorrichtung zusätzlich von ihrem Elektromotor aufgegebracht und während der Bremsung gehalten werden muß, der Elektromotor muß dementsprechend stärker ausgelegt sein. Weiterer Nachteil ist, daß die Rückstellfeder die Radbremsvorrichtung stets bis in ihre voll zurückgestellte Ausgangsstellung zurückbewegt, so daß ein Lüftspiel zwischen den Reibbremsbelägen und der Bremsscheibe mit zunehmender Abnutzung der Reibbremsbeläge größer wird. Dadurch vergrößert sich ein Zustellweg und verlängert sich eine Zustellzeit bis die Reibbremsbeläge in Anlage an die Bremsscheibe gelangen. Ebenso vergrößert sich die Federkraft der Rückstellfeder, die zum Bremsen überwunden werden muß mit zunehmender Abnutzung der Reibbremsbeläge, was den Wirkungsgrad der Radbremsvorrichtung weiter verschlechtert und einen ausreichend starken und standfesten Elektromotor erforderlich macht.

### Vorteile der Erfindung

Die erfindungsgemäße, elektromechanische Radbremsvorrichtung mit den Merkmalen des Anspruchs 1 weist einen selbsthemmungsfreien Spindeltrieb auf, dessen Gewindespindel sich durch Druck in axialer Richtung auf die Gewindespindel in Drehung gegenüber der Spindelmutter versetzen und dadurch axial verschieben läßt. Desweiteren sind erfindungsgemäß sowohl die Spindelmutter als auch die Gewindespindel drehbar gelagert, so daß eine Andruckkraft der Reibbremsbeläge an den Bremskörper beim Bremsen, die eine Kraft in axialer Richtung auf die Gewindespindel ausübt, diese in Rotation in der Spindelmutter versetzt und dadurch eine Rückstellung der erfindungsgemäßen Radbremsvorrichtung bewirkt, bis die Reibbremsbeläge mit geringer, eine Restbremskraft bewirkender Andruckkraft am Bremskörper anliegen, die eine nahezu freie Drehbarkeit des Bremskörpers zuläßt. Dadurch ist das Lösen der Radbremsvorrichtung bis auf eine akzeptable Restbremskraft im Fehlerfall sichergestellt. Zur Betätigung der Radbremsvorrichtung weist diese erfindungsgemäß eine lösbare Drehsicherungseinrichtung auf, die eine Rotation der Gewindespindel unterbindet und deren translatorische Verschiebung in axialer Richtung durch rotierenden Antrieb der Spindelmutter ermöglicht. Gelöst wird die Bremse durch rotierenden Antrieb der Spindelmutter in entgegengesetzter Richtung, so daß ein Lüftspiel zwischen Reibbremsbelag und Bremskörper einstellbar ist. Ein Lösen der Drehsicherungseinrichtung der Gewindespindel ist nur für den Fehlerfall vorgesehen.

Erindungsgemäß ist es ebenso möglich, die Gewindespindel anstelle der Gewindemutter rotierend anzutreiben und den Reibbremsbelag mit der Spindelmutter anstelle der Gewindespindel an den Bremskörper anzudrücken. In diesem Fall greift die Drehsicherungseinrichtung an der Spindelmutter an.

Die erfindungsgemäße Radbremsvorrichtung hat den Vorteil, daß ihre Drehsicherungseinrichtung, die ein Lösen der Radbremsvorrichtung im Fehlerfall ohne den Elektromotor ermöglicht, den Wirkungsgrad und die Funktion der Radbremsvorrichtung nicht beeinflußt. Weiterer Vorteil ist, daß das Lüftspiel zwischen Reibbremsbelag und Bremskörper mit dem Elektromotor unabhängig von einer Abnutzung des Reibbremsbelags stets auf den gleichen Wert einstellbar ist, so daß sich Zustellweg und Zustellzeit nicht verlängern.

Die Unteransprüche haben vorteilhafte Ausgestaltungen und Weiterbildungen der im Hauptanspruch angegebene Radbremsvorrichtung zum Gegenstand.

### Zeichnung

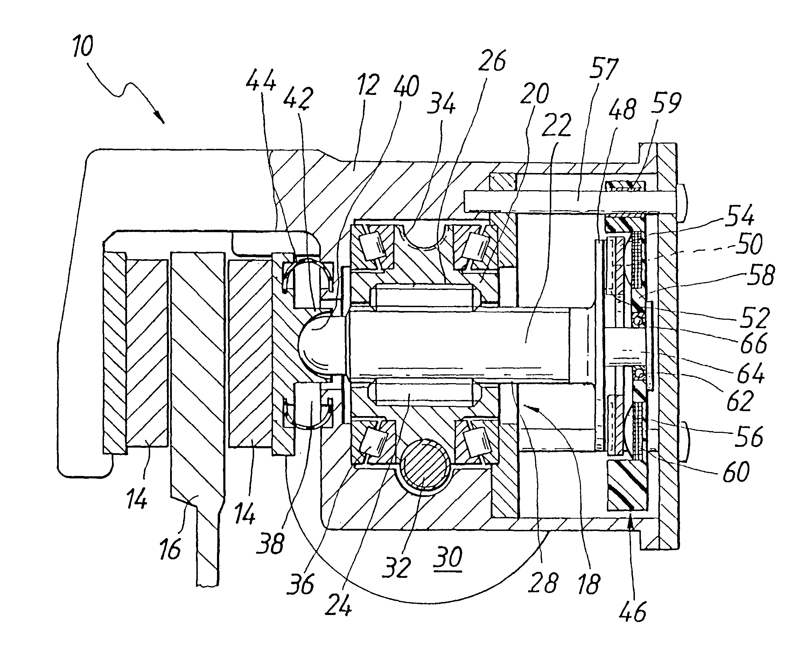

Die Erfindung wird nachfolgend anhand eines in der Zeichnung dargestellten Ausführungsbeispiels näher erläutert. Die einzige Figur zeigt eine erfindungsgemäße Radbremsvorrichtung im Achsschnitt.

### Beschreibung des Ausführungsbeispiels

Die in der Zeichnung dargestellte, erfindungsgemäße, elektromechanische Radbremsvorrichtung 10 ist als Scheibenbremse ausgebildet. Sie weist einen Schwimmsattel 12 auf, in dem ein Paar Reibbremsbeläge 14 beiderseits einer zwischen ihnen in Rotation versetzbaren Bremsscheibe 16 angebracht sind.

Zum Andrücken eines der beiden Reibbremsbeläge 14 an die Bremsscheibe 16 weist die erfindungsgemäße Radbremsvorrichtung 10 einen in ihren Schwimmsattel 12 eingebauten Spindeltrieb 18 auf. Wegen der Reibungsarmut und eines hohen Wirkungsgrades ist der Spindeltrieb 18 als Wälzgewindetrieb in Form eines Rollengewindetriebs ausgebildet. Er weist eine in einer Spindelmutter 20 koaxial einliegende Gewindespindel 22 und eine Anzahl Gewinderollen 24 auf, die in einem Zwischenraum zwischen Spindelmutter 20 und Gewindespindel 22 angeordnet sind. Die Gewinderollen 24 stehen mit einem Mutterngewinde 26 der Spindelmutter 20 und mit einem Spindelgewinde 28 der Gewindespindel 22 in Eingriff. Durch rotierenden Antrieb der Spindelmutter 20 werden die Gewinderollen 24 zu einer umlaufenden Bewegung um die Gewindespindel 22 herum wie Planetenräder eines Planetengetriebes angetrieben. Während ihrer Umlaufbewegung rollen die Gewinderollen 24 im Muttergewinde 26 und auf dem Spindelgewinde 28 ab, sie führen während der Umlaufbewegung um die Gewindespindel 22 herum eine Rotationsbewegung um ihre eigene Achse aus. Über die umlaufenden Gewinderollen 24 bewirkt ein rotierender Antrieb der Spindelmutter 28 eine translatorische Bewegung der Gewindespindel 22 in axialer Richtung.

Zum rotierenden Antrieb der Spindelmutter 20 weist die erfindungsgemäße Radbremsvorrichtung 10 einen Elektromotor 30 mit einer Schnecke 32 auf, die mit einer umlaufenden Verzahnung 34 der Spindelmutter 20 kämmt. Anstelle des Schneckengetriebes 32, 34 kann beispielsweise auch ein Spiralkegelgetriebe vorgesehen werden (nicht dargestellt). Der Elektromotor 30 ist als elektronisch kommutierbarer Motor ausgebildet.

Die Spindelmutter 20 ist mit einem Paar Axial-Schrägrollenlagern 36 drehbar im Schwimmsattel 12 gelagert und stützt sich über die Schrägrollenlager 36 axial am Schwimmsattel 12 ab.

An einem der Bremsscheibe 16 zugewandten Stirnende der Gewindespindel 22 ist einer der, Reibbremsbeläge 14 angeordnet. Eine Drehlagerung 38 zwischen der Gewindespindel 22 und dem Reibbremsbelag 14, die Druckkräfte in axialer Richtung von der Gewindespindel 22 auf den Bremsbelag 14 und in umgekehrter Richtung überträgt, ermöglicht eine Drehung der Gewindespindel 22 gegenüber dem drehfesten Reibbremsbelag 14. Die Drehlagerung weist eine mit der Gewindespindel 22 einstückige Kalotte 40 auf, die in einer Halbkugelpfanne 42 größeren Durchmesser des Reibbremsbelags 14 einliegt. Die Kalotte 40 bildet einen Lagerkopf, die Halbkugelpfanne 42 eine Lagerpfanne der Drehlagerung 38. Diese Drehlagerung 38 ist einfach in ihrem Aufbau und daher preiswert herstellbar. Da nur im Fehlerfall, nicht aber beim vorgesehenen Betätigen und Lösen der erfindungsgemäßen Bremsvorrichtung 10, eine Relativbewegung zwischen Gewindespindel 22 und Reibbremsbelag 14 stattfindet, ist eine Gleitlagerung als Drehlagerung 38 ausreichend, auf eine aufwendigere Wälzlagerung kann verzichtet werden. Die Drehlagerung 38 mit der Kalotte 40 und der Kugelpfanne 42 hat den Vorteil, daß sie in axialer Richtung hohen Belastungen standhält und eine geringe Reibung bei einer Drehbewegung zwischen Gewindespindel 22 und Reibbremsbelag 14 aufweist. Es können auch ein von der Kugelform abweichender Lagerkopf 40 und eine von der Kugelform abweichende Lagerpfanne 42 Verwendung finden, beispielweise Paraboloid- oder Elipsenformen.

Zwischen dem an der Gewindespindel 22 angebrachten Reibbremsbelag 14 und dem Schwimmsattel 12 ist eine Dichtmanschette 44 angebracht, die die Gewindespindel 22 im Bereich ihrer Kalotte 40 und die Halbkugelpfanne 42 des Reibbremsbelags 14 umgreift und den Spindeltrieb 18 und den Schwimmsattel 12 vor Eindringen von Feuchtigkeit und Schmutz von der Bremsscheibenseite her schützt. Die Dichtmanschette 44 ist kreisförmig ausgebildet, ihr Ringquerschnitt ist halbkreisbogenförmig. Anstelle der dargestellten Dichtmanschette 44 kann beispielsweise auch eine nicht dargestellte, die Form eines Faltenbalgs aufweisende Dichtmanschette eingesetzt werden. Die Dichtmanschette 44 hat neben ihrer Dichtfunktion die Aufgabe, den Reibbremsbelag 14 in axialer Richtung in Anlage an der Gewindespindel 22 zu halten.

Der Spindeltrieb 18 der erfindungsgemäßén Radbremsvorrichtung 10 ist selbsthemmungsfrei ausgebildet, d.h. durch Druck in axialer Richtung auf die Gewindespindel 22 läßt sich diese in Rotation versetzten und bewegt sich dabei translatorisch in axialer Richtung, sie "schraubt" sich aus der Spindelmutter 20 heraus. Zur Sicherung gegen Drehung der Spindelmutter 22 weist die Radbremsvorrichtung 10 eine lösbare Drehsicherungseinrichtung 46 auf einer der Bremsscheibe 16 abgewandten Seite des Spindeltriebs 18 auf: An einem der Bremsscheibe 16 abgewandten Stirnende weist die Gewindespindel 22 eine mit ihr einstückige Kupplungsscheibe 48 auf, die in einer Radialebene der Gewindespindel 22 angeordnet ist. Die Kupplungsscheibe 48 weist eine Verzahnung 50 auf einer dem Spindeltrieb 18 abgewandten Stirnseite auf, mit der sie mit einer komplementären Verzahnung 52 einer Ankerscheibe 54 in Eingriff steht.

Die Ankerscheibe 54 wird von einer Ringscheibenfeder 56, die sich an einer Kupplungsträgerplatte 58 abstützt, in axialer Richtung gegen die Kupplungsscheibe 48 gedrückt, wodurch die beiden Verzahungen 50, 52 miteinander in Eingriff gehalten werden. Die Ringscheibenfeder 56 ist an mehreren Stellen ihres Umfangs mit der Kupplungsträgerplatte 58 und mit der Ankerscheibe 54 vernietet, so daß die Ankerscheibe 54 und die Kupplungsträgerplatte 58 drehfest miteinander verbunden sind. Mittels einer in die Kupplungsträgerplatte 58 eingelassenen Wicklung 60 ist die Ankerscheibe 54 gegen die Kraft der Ringscheibenfeder 56 an die Kupplungsträgerplatte 58 magnetisch anziehbar, wodurch die Verzahnungen 50, 52 außer Eingriff kommen und die Kupplungsscheibe 48 mit der Gewindespindel 22 frei drehbar wird. Die Kupplung 48, 54, 58 ist also stromlos geschlossen. Sie ist an eine von der Stromversorgung des Elektromotors 30 unabhängige Stromversorgung angeschlossen.

Drei um je 120 Grad versetzt zueinander, achsparalell zur Gewindespindel 22 und radial außerhalb der Kupplungsscheibe 48 und der Ankerscheibe 54 am Schwimmsatttel 12 angebrachte Führungsbolzen 57 sind durch Gleitlagerbuchsen 59 der Kupplungsträgerplatte 58 hindurchgesteckt, so daß die Kupplungsträgerplatte 58 drehsicher und in axialer Richtung verschiebbar im Schwimmsattel 12 geführt ist. Sie ist über ein Kugellager 62 drehbar auf einem axial in die Gewindespindel 22 eingeschraubten Tellerbolzen 64 gelagert, dessen Teller 66 die Kupplungsträgerplatte 58 in axialer Richtung sichert. Die Kupplungsträgerplatte 58 und die Ankerscheibe 54 bewegen sich bei einer translatorischen Bewegung der Gewindespindel 22 mit dieser mit.

Die Drehsicherungseinrichtung 46 wird hier als Kupplung und nicht als Bremse bezeichnet, um sie deutlich von anderen Teilen der Radbremsvorrichtung 10 zu unterschieden. Die Kupplung 46 ist im dargestellten Ausführungsbeispiels als formschlüssige Kupplung ausgebildet, die durch Bestromung ihrer Wicklungen 60 ausgerückt wird. Die Betätigung der Kupplung kann auch auf andere Weise, beispielsweise mechanisch, erfolgen.

Die Funktion der erfindungsgemäßen Radbremsvorrichtung 10 ist folgende: Zum Betätigen wird die Spindelmutter 20 mit dem Elektromotor 30 rotierend in einer Betätigungsdrehrichtung angetrieben, so daß die Gewindespindel 22 translatorisch axial in Richtung der Bremsscheibe 16 verschoben wird. Dabei verhindert die stromlos eingerückte Kupplung 46 eine Rotation der Gewindespindel 22. Die Gewindespindel 22 drückt den an ihr angeordneten Reibbremsbelag 14 gegen eine Seite der Bremsscheibe 16. Über eine Reaktionskraft wird der zweite Reibbremsbelag 14 über den Schwimmsattel 12 in an sich bekannter Weise an die andere Seite der Bremsscheibe 16 gedrückt. Die Bremsscheibe 16 wird gebremst, wobei eine Bremskraft bzw. ein Bremsmoment dem mit dem Elektromotor 30 aufgebrachten Antriebsmoment proportional ist.

Zum Lösen der Radbremsvorrichtung 10 oder zum Verringern der Bremskraft wird die Spindelmutter 20 mit dem Elektromotor 30 in entgegengesetzter Rückstelldrehrichtung angetrieben, wodurch die Gewindespindel 22 translatorisch von der Bremsscheibe 16 weg bewegt wird. Der an ihr angeordnete Reibbremsbelag 14 wird über die Dichtmanschette 44 von der Bremsscheibe 16 abgehoben. Die Gewindespindel 22 wird soweit rückgestellt, daß ein unabhängig von einer Abnutzung der Reibbremsbeläge 14 gleichbleibender Spalt zwischen den Reibbremsbelägen 14 und der Bremsscheibe 16 bei nicht betätigter Radbremsvorrichtung 10 besteht, das sog. "Lüftspiel" der erfindungsgemäßen Radbremsvorrichtung 10 bleibt konstant.

Im Fehlerfall, d.h. bei Ausfall einer Steuerelektronik für die erfindungsgemäße Radbremsvorrichtung 10, bei Ausfall ihres Elektromotors 30 oder dessen Stromversorgung wird die Kupplung 46 gelöst, indem ihre Wicklung 60 bestromt wird. Die Gewindespindel 22 ist dadurch frei drehbar, sie wird von dem an die Bremsscheibe 16 angedrückten Reibbremsbelag 14 in axiale Richtung von der Bremsscheibe 16 weggedrückt, wodurch sie, da das Spindelgetriebe 18 selbsthemmungsfrei ist, in Rotation versetzt wird und sich translatorisch von der Bremsscheibe 16 entfernt. Die Radbremsvorrichtung 10 wird dadurch gelöst bis die Andruckkraft der Reibbremsbeläge 14 an die Bremsscheibe 16 so gering ist, daß sie die Gewindespindel 22 aufgrund innerer Reibung des Rollengewindetriebs 18 nicht weiter bewegt. Die Reibbremsbeläge 14 liegen mit geringer Restkraft an der Bremsscheibe 16 an, es wirkt eine akzeptable Restbremskraft der Radbremsvorrichtung 10 auf die Bremsscheibe 16. Diese Restbremskraft ist so gering, daß die Bremsscheibe 16 nahezu frei drehbar ist und ein mit der Radbremsvorrichtung 10 ausgerüstetes Kraftfahrzeug gefahren werden kann, ohne daß es zu einer Überhitzung der Radbremsvorrichtung 10 kommt.

## Patentansprüche

1. Elektromechanische Radbremsvorrichtung für ein Kraftfahrzeug, mit einem Elektromotor (30), mit einem Spindeltrieb (18), der mit dem Elektromotor (30) rotierend antreibbar ist, und mit einem Reibbremsbelag (14), der mit dem Spindeltrieb (18) an einen Bremskörper (16) andrückbar ist, **dadurch gekennzeichnet, daß** der Spindeltrieb (18) selbsthemmungsfrei ist, daß eine Spindelmutter (20) und eine Gewindespindel (22) des Spindeltriebs (18) drehbar gelagert sind, und daß das den Reibbremsbelag (14) an den Bremskörper (16) andrückende Teil (20, 22) des Spindeltriebs (18) eine lösbare Drehsicherungseinrichtung (46) aufweist.

2. Elektromechanische Radbremsvorrichtung nach Anspruch 1, **dadurch gekennzeichnet, daß** der Elektromotor (30) ein elektronisch kommutierbarer Motor ist.

3. Elektromechanische Radbremsvorrichtung nach Anspruch 1 oder 2, **dadurch gekennzeichnet, daß** der Spindeltrieb (18) ein Wälzgewindetrieb, insbesondere ein Rollengewindetrieb ist.

4. Elektromechanische Radbremsvorrichtung nach Anspruch 1, **dadurch gekennzeichnet, daß** die Drehsicherungeseinrichtung eine schaltbare Kupplung (46) aufweist.

5. Elekromechanische Radbremsvorrichung nach Anspruch 4, **dadurch gekennzeichnet, daß** die Kupplung (46) eine Elektromagnetkupplung ist.

6. Elektromechanische Radbremsvorrichtung nach Anspruch 1 oder 3, **dadurch gekennzeichnet, daß** die Drehsicherungseinrichtung (46) axial zum Spindeltrieb (18) verschiebbar und gegen Verdrehen gesichert gelagert ist.

7. Elektromechanische Radbremsvorrichtung nach Anspruch 1 oder 3, **gekennzeichnet durch** eine Drehlagerung (38), die zwischen dem den Reibbremsbelag (14) an den Bremskörper (16) andrückenden Teil (22) des Spindeltriebs (18) und dem Reibbremsbelag (14) angeordnet ist, die eine Drehbewegung zwischen dem den Reibbremsbelag (14) an den Bremskörper (16) andrückenden Teil (22) des Spindeltriebs (18) und dem Reibbremsbelag (14) ermöglicht und die eine translatorische Bewegung des den Reibbremsbelag (14) an den Bremskörper (16) andrückenden Teils (22) des Spindeltriebs (18) in Richtung des Reibbremsbelags (14) auf den Reibbremsbelag (14) überträgt.

8. Elektromechanische Radbremsvorrichtung nach Anspruch 7, **dadurch gekennzeichnet, daß** die Drehlagerung (18) einen gerundeten Lagerkopf (40) aufweist, der in einer Lagerpfanne (44) einliegt.

9. Elektromechanische Radbremsvorrichtung nach Anspruch 1, **gekennzeichnet durch** eine Dichtmanschette (44), die auf einer dem Reibbremsbelag (14) zugewandten Seite des Spindeltriebs (18) angeordnet ist, die den Spindeltrieb (18) gegen Nässe und Verschmutzung schützt und die den Reibbremsbelag (14) in Anlage an dem Teil (22) des Spindeltriebs (18) hält, das den Reibbremsbelag (14) gegen den Bremskörper (16) drückt.

## Claims

1. Electromechanical wheel-brake appliance for a motor vehicle, with an electric motor (30) with a spindle drive (18), which can be driven in rotation by means of the electric motor (30), and with a friction brake pad (14), which can be pressed against a braking body (16) by means of the spindle drive (18), **characterized in that** the spindle drive (18) is free from self-locking, **in that** a spindle nut (20) and a threaded spindle (22) of the spindle drive (18) are rotatably mounted, and **in that** the part (20, 22) of the spindle drive (18) that presses the friction brake pad (14) against the braking body (16) has a releasable anti-rotation safeguard (46).

2. Electromechanical wheel-brake appliance according to Claim 1, **characterized in that** the electric motor (30) is an electronically commutatable motor.

3. Electromechanical wheel-brake appliance according to Claim 1 or 2, **characterized in that** the spindle drive (18) is a rolling-element screw drive, in particular a roller screw drive.

4. Electromechanical wheel-brake appliance according to Claim 1, **characterized in that** the anti-rotation safeguard is a clutch (46).

5. Electromechanical wheel-brake appliance according to Claim 4, **characterized in that** the clutch (46) is an electromagnetic clutch.

6. Electromechanical wheel-brake appliance according to Claim 1 or 3, **characterized in that** the anti-rotation safeguard (46) is mounted in such a way as to be axially displaceable relative to the spindle drive (18) and secured against rotation.

7. Electromechanical wheel-brake appliance according to Claim 1 or 3, **characterized by** a rotary bearing arrangement (38), which is arranged between the part (22) of the spindle drive (18) that presses the friction brake pad (14) against the braking body (16) and the friction brake pad (14), which allows rotary motion between the part (22) of the spindle drive (18) that presses the friction brake pad (14) against the braking body (16) and the friction brake pad (14) and transmits to the friction brake pad (14) a translational motion in the direction of the friction brake pad (14) of the part (22) of the spindle drive (18) that presses the friction brake pad (14) against the braking body (16).

8. Electromechanical wheel-brake appliance according to Claim 7, **characterized in that** the rotary bearing arrangement (18) has a rounded bearing head (40), which rests in a bearing socket (44).

9. Electromechanical wheel-brake appliance according to Claim 1, **characterized by** a sealing sleeve (44), which is arranged on a side of the spindle drive (18) that faces the friction brake pad (14), which protects the spindle drive (18) from moisture and dirt and which holds the friction brake pad (14) in contact with the part (22) of the spindle drive (18) that presses the friction brake pad (14) against the braking body (16).

## Revendications

1. Frein électromagnétique de roue pour véhicule automobile, comprenant un moteur électrique (30), un entraîneur à broche filetée (18) que peut faire tourner le moteur électrique (30) et une garniture de frein (14) que l'entraîneur (18) peut appliquer sur un corps de frein (16),
**caractérisé en ce que**
l'entraîneur à broche filetée (18) n'est pas irréversible, l'écrou de broche (20) et la broche (22) de l'entraîneur à broche (18) peuvent tourner et la partie (20, 22) de l'entraîneur (18) qui met en pression la garniture de frein (14) sur le corps de frein (16) présente un dispositif antirotation (46) qui peut être désactivé.

2. Frein électromécanique selon la revendication 1,
**caractérisé en ce que**
le moteur électrique (30) est à commutation électronique.

3. Frein électromécanique selon l'une quelconque des revendications 1 ou 2,
**caractérisé en ce que**
l'entraîneur à broche (18) est un entraîneur fileté à roulement, en particulier un entraîneur fileté monté sur des rouleaux.

4. Frein électromécanique selon la revendication 1,
**caractérisé en ce que**
le dispositif antirotation présente un accouplement (46) commutable.

5. Frein électromécanique selon la revendication 4,
**caractérisé en ce que**
l'accouplement (46) est électromagnétique.

6. Frein électromécanique selon l'une quelconque des revendications 1 ou 3,
**caractérisé en ce que**
le dispositif antirotation (46) peut coulisser axialement par rapport à l'entraîneur (18) et il est monté de manière à ne pas pouvoir tourner.

7. Frein électromécanique selon l'une quelconque des revendications 1 ou 3,
**caractérisé en ce qu'**
un palier de rotation (38), monté entre la partie (22) de l'entraîneur à broche filetée (18) qui applique la garniture de frein (14) sur le corps de frein (16) et cette garniture (14), permet une rotation relative entre la partie (22) de l'entraînement (18) qui applique la garniture de frein (14) sur le corps de frein (16) et cette garniture, et il transmet à la garniture (14) le mouvement de translation qu'effectue en direction de cette garniture la partie (22) de l'entraînement (18) qui applique la garniture (14) sur le corps de frein (16).

8. Frein électromécanique selon la revendication 7,
**caractérisé en ce que**
le palier de rotation (18) présente une tête de palier (40) arrondie logée dans un coussinet de palier (44).

9. Frein électromécanique selon la revendication 1,
**caractérisé en ce qu'**
une manchette d'étanchéité (44), montée sur un côté de l'entraîneur à broche filetée (18) proche de la garniture de frein (14) protège l'entraîneur (18) de l'humidité et des saletés et maintient la garniture de frein (14) en appui sur la partie (22) de l'entraîneur (18) qui pousse la garniture (14) contre le corps de frein (16).
